Europäisches Patentamt

European Patent Office

Office européen des brevets

(11) Publication number: **0 408 030 A2**

# EUROPEAN PATENT APPLICATION

(21) Application number: 90113337.1

(22) Date of filing: 12.07.90

(51) Int. Cl.⁵: **H02J 7/24**

(30) Priority: 12.07.89 JP 181032/89

(43) Date of publication of application:
16.01.91 Bulletin 91/03

(84) Designated Contracting States:
DE FR GB

(71) Applicant: **MITSUBISHI DENKI KABUSHIKI KAISHA**
2-3, Marunouchi 2-chome Chiyoda-ku
Tokyo(JP)

(72) Inventor: **Iwatani, Shiro, c/o Mitsubishi Denki**

K.K.
Himeji Seisakusho, 840 Chiyoda-cho
Himeji-shi, Hyogo(JP)
Inventor: Iwaki, Yoshiyuki, c/o Mitsubishi
Denki K.K.
Himeji Seisakusho, 840 Chiyoda-cho
Himeji-shi, Hyogo(JP)

(74) Representative: **Lehn, Werner, Dipl.-Ing. et al**
Hoffmann, Eitle & Partner Patentanwälte
Arabellastrasse 4e 4
D-8000 München 81(DE)

(54) **Control device of vehicle mounted alternator.**

(57) A control device of a vehicle-mounted, self-excited alternator for supplying a field current to its field coil and selectively a charge current to a battery and a power to a high voltage electric load of the vehicle comprises field current detection means (312) for detecting field current flowing through the field coil (102) and a field current limiter (4) which includes a reference means (401, 402) for providing a fixed reference value, a comparator (403) for comparing the field current detected by the field current detection means with the fixed reference value and means responsive to an output of the comparator to control the voltage regulator to cut-off the field current when the field current detected is larger than the reference value.

FIG. 1

## CONTROL DEVICE OF VEHICLE MOUNTED ALTERNATOR

### BACKGROUND OF THE INVENTION

The present invention relates to a control device of an alternator and, particularly, to a control device of a vehicle-mounted alternator for temporarily switching its output connection from a storage battery to a high voltage electric load of the vehicle, which is driven by a higher voltage than an ordinary output voltage of the alternator to be supplied to the battery to charge the latter, s so that enough power is supplied to the load.

In order to melt frozen water on a front glass of a vehicle in a low temperature area within a short time, a system has been proposed in which an output voltage of an alternator is switched from a usual 14V for charging a vehicle-mounted storage battery to a high voltage of 40 -70V temporarily to supply power of about 1 KW to a high voltage load such as heater embeded in the front glass.

When a separately-excited alternator, that is, an alternator whose exciting current is supplied from a battery, is used as the vehicle-mounted alternator, the battery may be discharged much during this high voltage driving. Therefore, in order to avoid such undesirable discharge of the battery, a self-excited alternator, that is, an alternator whose exciting current is supplied from an output thereof, is used. In such case, however, another problem may occur. That is, a field coil of the self-excited alternator may be burnt by large field current due to high voltage applied thereacross.

USP 4,346,337 or Japanese Kokai (Patent) No. 63-302735 discloses a field current limitation of a self-excited alternator. In either of them, an oscillator is provided to produce a fixed pulse waveform signal by which a field current control element is on-off controlled when a detection of field current exceeds a predetermined value. Since, in these system, a voltage applied across the field coil is fixed to a certain value, for example, 40V, the current limit value itself varies with variation of the output voltage of the alternator. Since the field current limit value at, for example, 80V may be twice the limit value at 40V, it is impossible to prevent the burning of the field coil completely.

### SUMMARY OF THE INVENTION

An object of the present invention is to obtain a control device of a vehicle-mounted alternator by which the storage battery discharge and burning of field coil are prevented.

The control device according to the present invention comprises field current detection means for detecting field current and a field current limiter for cut-off field current when it exceeds a predetermined value.

In the present invention, field current is detected and when it exceeds a predetermined value, the field current is cut-off.

### BRIEF DESCRIPTION OF THE DRAWING

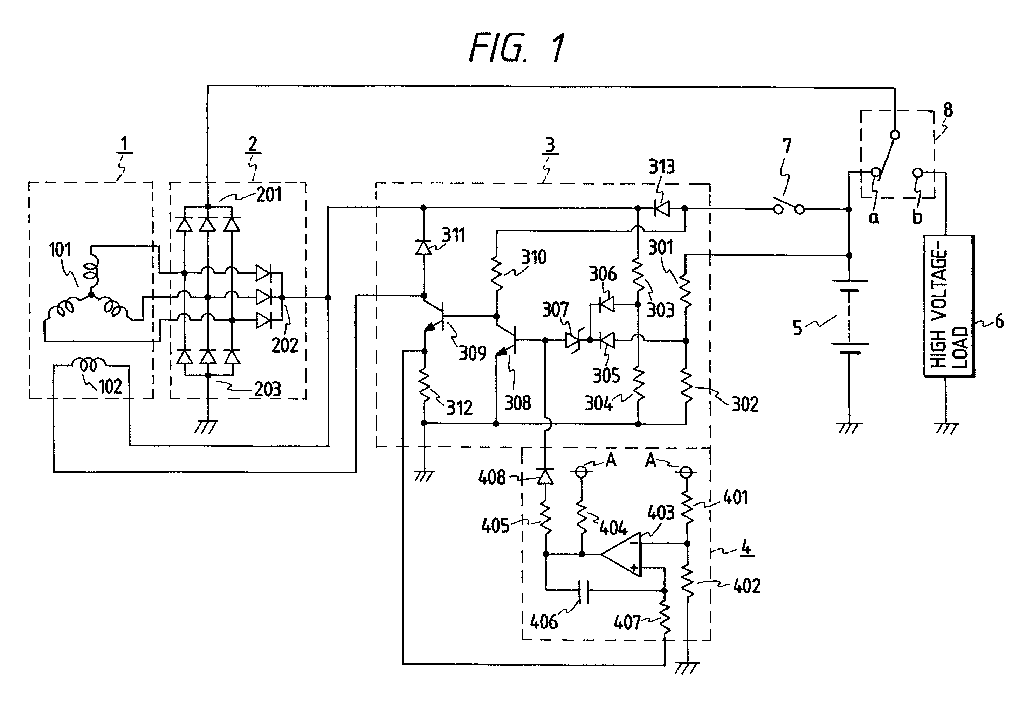

Fig. 1 is a circuit diagram of a control device of a vehicle mounted alternator according to the present invention.

### DETAILED DESCRIPTION OF THE PRFERRED EMBODIMENT

An embodiment of the present invention will be described below with reference to the drawing.

Fig. 1 shows a circuit diagram of a control device of a vehicle-mounted alternator according to this embodiment. An alternator 1 is adapted to be driven by an engine of a vehicle. The alternator 1 is of the self-excited type and has an armature coil 101 and a field coil 102.

A rectifier 2 is included for full-wave rectification of an a.c. output of the alternator 1, which has output terminals 201, 202 and 203. The output terminal 201 is a main rectifier output terminal from which a main output is provided, the output terminal 202 is an auxiliary rectifier output terminal for exciting the field coil 102 and the output terminal 203 is a grounding terminal.

A voltage regulator 3 is connected to the auxiliary rectifier output terminal 202 for controlling the output voltage of the alternator 1 to a predetermined value, which is composed of a voltage divider composed of resisters 301 and 302 for detecting a voltage of a storage battery 5, a voltage divider composed of resisters 303 and 304 for detecting a voltage at the auxiliary rectifier output terminal 202, reverse blocking diodes 305, 306 for separating between these voltage divider circuits, a Zener diode 307, a control transister 308 on-off controlled by on-off operation of the Zener diode 307, an output transister 309 for on-off controlling the field current flowing through the field coil 102. and on-off controlled by the control transister 308, a base resister 310 of the output transister 309, a diode 311 connected in parallel to the field coil 102 to absorbe on-off surge generated in the field coil 102, a field current detecting element 312 composed of a resister having value of several ten m and a reverse blocking diode 312.

A field current limiter 4 is provided for limiting the field current to the predetermined value, which is composed of a voltage divider composed of series resisters 401 and 402 for dividing a constant voltage from a constant voltage source A to produce a reference voltage, a comparator 403 having an inversion input supplied with the reference voltage, an output circuit of the comparator 403 composed of resisters 404 and 405, a capacitor 406 and a resister 407 which constitute a feedback circuit of the comparator and a reverse blocking diode 408 in series with the rersister 405.

A high voltage electric load 6 of a vehicle is connected such that it can be driven by the output of the alternator 1 separately from the storage battery 5 for a short time.

An output changeover switch 8 has a contact a connected to the storage battery 5 and a key-switch 7 of the vehicle and a contact b connected to the high voltage electric load 6. The switch 8 serves to switch the output connection of the alternator 1 between the storage battery 5 and the high voltage vehicle electric load 6.

In operation, the output changeover switch 8 is normally in a shown position so that the output of the alternator 1 is connected to the storage battery 5 to operate in a battery charge mode.

In this battery charge mode, upon a closure of the key switch 7 for starting the engine, a field current flows from the storage battery 5 through the key switch 7 and the reverse blocking diode 313 to the field coil 102, making the alternator ready to generate power. Then, when the engine is started and the alternator 1 is driven and commences its power generation, a voltage at the main rectifier output terminal 201 increases by which the battery 5 is charged to increase its terminal voltage.

The voltage regulator 3 detects the terminal voltage of the storage battery 5 by means of the voltage divider composed of the series resisters 301 and 302 and, when the terminal voltage exceeds a predetermined charging voltage set to, for example, 14V, by rersistances of the resisters 301 and 302 of the voltage divider, the Zener diode 307 supplied with the voltage divider through the reverse blocking diode 305 is turned on and thus the control transister 308 having a base connected tothe Zener diode 307 is also turned on. On the contrary, when the terminal voltage of the storage battery 5 becomes below the predetermined value, the Zener diode 307 is turned off and thus the control transister 308 is turned off. Therefore, the output transister 309 having a base connected to a collector of the control transister 308 is turned off.

Thus, the field current flowing through the field coil 102 is on-off controlled according to the on-off operation of the control transister 308 to regulate the terminal voltage of the storage battery 5.

In this case, field current is supplied from the auxiliary rectifier output terminal 202, resulting in self-excited operation.

When the output changeover switch 8 is shifted to the contact b so that the output of the alternator 1 is connected to the high voltage electric load 6, the storage battery 5 is separated from the output of the alternator and no charging is performed. Therefore, the terminal voltage of the battery 5 becomes lower than the predetermined value 14V set by the voltage divider 301 and 302. Therefore, the output transister 309 is conductive continuously and thus the output voltage of the alternator 1 and hence the auxiliary rectifier output terminal 202 continues to rise.

The voltage at the auxiliary rectifier output terminal 202 is detected by the voltage divider composed of the series resisters 303 and 304 and, when it exceeds a predetermined high voltage value set by these resisters 303 and 304 to, for example, 70V, the Zener diode 307 connected through the reverse blocking diode 306 to the voltage divider is turned on and thus the control transister 308 is turned on.

On the contrary, when the terminal voltage of the auxiliary rectifier output terminal 202 is lowered below the predetermined high voltage value, the Zener diode 307 is turned off and thus the control transister 308 is turned off, causing the output transister 309 to be turned on.

Therefore, the output transister 309 is also on-off controlled, so that the output voltage of the alternator 1 is regulated to the predetermined high voltage value, in a high voltage mode. In this case, the field current supplied from the auxiliary rectifier output terminal 202 is is 5 times that in the battery charge mode due to the output voltage of 70V which is 5 times the voltage 14V in the battery charge mode. Therefore, heat generation in the field coil 102 becomes so large that the coil 102 may be burnt, if this condition continues.

The field current limiter 4 prevents the field coil 102 from being burnt. An increase of field current with increase of voltage at the auxiliary rectifier output terminal 202 is detected as a voltage by a field current detecting resister element 312 connected in series with the output transister 309 of the voltage regulator 3 and through the rersister 407 to a non-inverse input of the comparator 403. When the detected voltage value exceeds a predetermined value corresponding to a field current limit set by the voltage divider resisters 401 and 402, an output of comparator 403 becomes high level, so that a current flows from the constant voltage source A through the resisters 404 and 405 and the diode 408 to the base of the control transister 308 so that the latter is turned on and thus the output transister 309 is turned off. Therefore, field current is limited to the above mentioned limit value, preventing burning of the field coil 102.

In case where field current is below the limit value, the output of the comparator 403 becomes low level providing no influence on the operation of the control transister 308. The feedback circuit composed of the capacitor 406 and the resister 407 serves to prevent an abnormal oscillation of the operation of the comparator 403.

As mentioned, according to the present invention, field current is cut-off when it exceeds the predetermined value and therefore it is possible to reliably prevent burnig of the field coil even if the alternator output varies. Further, due to the self-excited type, it is possible to prevent undesirable discharge of the storage battery even in the high voltage mode.

## Claims

1. A control device of a vehicle-mounted, self-excited alternator having an armature coil and a field coil and including a rectifier for rectifying an a.c. output of said alternator and supplying a field current to said field coil and a charge current to a vehicle-mounted storage battery, a high voltage electric load of said vehicle to be energized by a higher voltage than a terminal voltage of said storage battery and a changeover switch for connecting an output of said rectifier selectively to said storage battery and to said high voltage load, comprising field current detection means for detecting field current flowing through said field coil and a field current limiter for cut-off field current when the field current exceeds a predetermined value.

2. The control device claimed in claim 1, wherein said field current limiter comprises a reference means for providing a fixed reference value, a comparator for comparing the field current detected by said field current detection means with said fixed reference value and means responsive to an output of said comparator to control said voltage regulator to cut-off the field current when the field current detected is larger than said reference value.

3. The control device claimed in claim 2, wherein said comparator includes a negative feedback circuit for preventing an abnormal oscillation of said comparator.

FIG. 1

EP 0 408 030 A2